# EUROPÄISCHE PATENTSCHRIFT

(11) **EP 1 074 590 B1**
(45) Veröffentlichungstag und Bekanntmachung des Hinweises auf die Patenterteilung: **06.05.2004**
(21) Anmeldenummer: 00115050.7
(22) Anmeldetag: 26.07.2000
(51) Int. Cl.: C09D 175/04, C08G 18/70, C08G 18/42, C09D 101/18

(54) **Cellulose-Substanz-enthaltendes Überzugsmittel sowie dessen Verwendung in Lacken**
Coating containing cellulosic material and its use in lacquers
Revêtement contenant un matériau cellulosique ainsi que son utilisation dans des peintures

(30) Priorität: 04.08.1999 DE 19936634
(43) Veröffentlichungstag der Anmeldung: 07.02.2001
(73) Patentinhaber: Wolff Walsrode AG, 29655 Walsrode (DE)
(72) Erfinder: Hoppe, Lutz, Dr., 29664 Walsrode (DE); Poersch-Panke, Hans-Günter, Dr., 29699 Bomlitz (DE); Nachtkamp, Klaus, Dr., 29664 Walsrode (DE)
(74) Vertreter: Feldhues, Michael L.F., Dr.

(56) Entgegenhaltungen:
- EP-A- 0 024 296
- EP-A- 0 076 443
- EP-A- 0 947 570
- WO-A-00/73388
- DE-A- 2 215 624
- DE-A- 2 542 767
- US-A- 5 384 163

## Beschreibung

Seit langem werden Nitrocellulose-Alkydharzkombinationen, gelöst in organischen Lösemitteln (bekannt unter dem Namen "NC-Kombi-Lacke"), zur Lackierung verschiedener Oberflächen wie z.B. Holz, Metall, Papier, Leder u.a.m. eingesetzt. Der Lösemittelgehalt liegt im Bereich von 60 bis 80 %.

In der EP 0 076 443 wird u.a. die Herstellung von wäßrigen Nitrocellulose-Lackharz-Emulsionen beschrieben, die zur Oberflächenlackierung verwendet werden können. Diese Oberflächen weisen jedoch nach DIN 68 861, Teil 1, 1 B, unzureichende Beständigkeiten auf

Chemisch vernetzende wäßrige Zwei-Komponenten-Polyurethan-Beschichtungsmittel mit freien Polyisocyanaten als Härter für das Bindemittel wurden in EP 0 358 979 beschrieben. Danach vermögen Polyhydroxyacrylate als Bindemittelkomponente bestimmte Polyisocyanate mit freien Isocyanatgruppen, die auch als Lackpolyisocyanate bezeichnet werden, zu emulgieren. Das so entstehende wäßrige Zwei-Komponenten-System härtet zu vemetzten Filmen aus. Die Lackpolyisocyanate sind Biuret-, Urethan-, Uretdion- und/oder Isocyanatgruppen enthaltende oligomere Derivate von gut verfügbaren monomeren oder einfachen Diisocyanaten, insbesondere von Hexamethylendiisocyanat (HDI). Die nach EP 0 358 979 verwendeten Lackpolyisocyanate haben eine Viskosität bei 23°C von bis zu 1 000 mPa·s und weisen eine mittlere NCO-Funktionalität von 2,2 bis 5 auf.

In der Offenlegungsschrift DE-A 4 226 243 wird ein wäßriges Zwei-Komponenten-Überzugsmittel auf Basis von Polyisocyanaten und selbstemulgierenden fettsäuremodifizierten Polyestem und Polyurethanen beschrieben. Auch die europäische Patentanmeldung EP-A 0 496 205 beschreibt wäßrige Bindemittelkombinationen auf Basis von Polyisocyanaten und selbstemulgierenden Urethan-, Carboxyl- und Hydroxyl-Gruppen aufweisenden Polyesterharzen. In der deutschen Patentschrift DE 3 122 030 werden Überzugszusammensetzungen aus Polyisocyanat, wasserverdünnbaren Alkyd-, Melamin- und Acrylharzen beschrieben, die noch wassermischbare Lösemittel enthalten.

Nachteile dieser oben beschriebenen wasserverdünnbaren Zwei-Komponenten-Bindemittel ist der niedrige erreichbare Festkörpergehalt, die relativ niedrige Kochergrenze und die kurze Topfzeit.

Nachteile der Zwei-Komponenten-Überzugsmittel auf Basis Hydroxylgruppen-aufweisenden Polyesterharzen (Alkydharzen oder Acrylaten) sind die allgemein bekannten kurzen Topfzeiten und die langen Trockenzeiten. Der Einbau von Nitrocellulosen mit einem Stickstoffgehalt von 10,7 bis 12,6 % verbessert die "Anfeuerung" auf Holz, verkürzt die Trockenzeit, erhöht die Härte und verbessert die Schleifbarkeit.

Die erfindungsgemäße Aufgabe bestand nun darin, die Nachteile der wäßrigen NC-Lackharz-Emulsionen zu beheben sowie die Herstellung und Verwendung der verbesserten NC-Lackharz-Emulsion. Dies wurde erreicht durch Zusatz von in Wasser emulgierbaren Polyisocyanaten.

Gegenstand der Erfindung sind wäßrige Emulsionen vom Öl-in-Wasser-Typ, die als Bindemittel wenigstens eine Cellulose-Substanz und Hydroxylgruppen-aufweisende Lackharze und zusätzlich ein wasseremulgierbares Polyisocyanat enthalten aufgebaut aus:
a) 5,0 - 50 Gew.-% Cellulose-Substanz
b) 5,0 50 Gew.-% einen oder mehrerer Hydroxylgruppen-enthaltende Lackharze
c) 2,0 - 25 Gew.-% einen oder mehrerer Polyisocyanate mit mehr als einer freien Isocyanatgruppe
d) 10,0 - 65 Gew.-% Wasser
e) 0,5 - 30 Gew.-% Weichmacher
f) 0,0 - 20 Gew.-% Emulgatoren
g) 0,0 - 45 Gew.-% wenigstens eines organischen Lösemittels
wobei die Summe a) - g) immer 100 Gew.-% ist, dadurch gekennzeichnet, daß das Gewichtsverhältnis Cellulose-Substanz : OH-Gruppen-haltiges Lackharz 1 : 5 bis 5 : 1 und das Äquivalentverhältnis der OH-Gruppen (aus dem Lackharz) zu den NCO-Gruppen 1 : 0,05 bis 1 : 5 beträgt und wobei die Polyisocyanat komponente c) unter Rühren der wässrigen Lachemulsion aus den übrigen Komponenten zugeseht wurde.

Als Cellulose-Substanz eignen sich vorzugsweise Celluloseester, insbesondere Nitrocellulose aller Viskositätsstufen oder plastifizierte Nitrocellulose oder deren Mischungen. Ganz besonders geeignet ist Nitrocellulose, beispielsweise die üblichen Collodiumwollequalitäten, d.h. Cellulosesalpetersäureester mit einem Stickstoffgehalt von 10,7 bis 12,6 Gew.-%.

Weitere einsetzbare Cellulose-Substanzen sind Celluloseacetobutyrat und Celluloseacetopropionat verschiedener Viskositäts- und Substitutionsstufen. Als Lackharze können die üblichen Lackharze verwendet werden, wenn diese mit Isocyanat reaktive Gruppen, wie z.B. -OH, -COOH, -NH₂, -CONH₂ enthalten. Übliche Lackharze sind z.B. Alkyd-, Maleinsäure-, Phenol, Formaldehyd-, Xylol-Formaldehyd-, Keton-, Sulfonamid-, Aldehyd-, Amin-, Epoxy-, Carbamidsäureester-, Kumaron-Inden-Harze, Ester der Saccharose, Vinyl-, Acrylat- und deren Copolymerisationsharze.

Es ist vorteilhaft, wenn die Hydroxylgruppen-haltigen Lackharze eine OH-Zahl zwischen 20 bis 200 mg KOH/g haben.

Als Weichmacher können die üblichen Weichmacher wie z.B. die Ester von aliphatischen Monocarbonsäure, vorzugsweise mit C₂-C₁₈ wie Cetylacetat, Glykoldiacetat, Stearate, Ricinolacetate, Dicarbonsäuren, wie z.B. der Dioctyladipat, Dimethylcyclohexylmethyladipat, Dibutylsebacat; aromatischen Dicarbonsäuren, wie z.B. der Dibutylphthalat, Dioctylphthalat, Dicyclohexylphthalat, aliphatischen Tricarbonsäure, vorzugsweise mit C₈, von aromatischen Dicarbonsäuren und von einwertigen Alkoholen mit C₂-C₁₀, von zweiwertigen Alkoholen mit C₂-C₆ und dreiwertigen Alkoholen mit C₃ oder die Ester von anorganischen Säuren, wie z.B. Tributylphosphat, Triphenylphosphat; Estern der Zitronensäure mit Alkoholen mit 1 bis 5 C-Atomen, welche zusätzlich mit Monocarbonsäuren mit 1 bis 4 C-Atomen umgesetzt sein können; sowie Sulfonamide, Öle wie Rizinusöl und Leinöl und die Alkoxylierungsprodukte der genannten Verbindungen, wie z.B. ethoxylierte Rizinusöle und Sojaöle, Stearate und Phosphorsäureester eingesetzt werden.

Als anionische Emulgatoren sind ferner die Dinatriumsalze der Sulfobernsteinsäurederivate von ethoxylierten Nonylphenolen zu nennen.

Als Emulgatoren können gegebenenfalls anionische Emulgatoren, beispielsweise langkettige Alkylarylsulfonate, wie Dodecylbenzol- oder Butylnaphthalinsulfonat, Alkylsulfate, wie Lauryl- oder Stearylalkoholsulfate, Sulfobernsteinsäureester, wie Dioctyldinatriumsuccinat, oder nichtionogene Emulgatoren, wie Octyl- oder Nonylphenoloxethylate verwendet werden.

Als Lösemittel sind die üblichen organischen Lösemittel einsetzbar, sofern die Cellulose-Substanz und das Lackharz darin löslich sind.

Bei den Polyisocyanaten handelt es sich um beliebige organische Polyisocyanate mit aliphatisch, cycloaliphatisch, araliphatisch und/oder aromatisch gebundenen, freien Isocyanatgruppen, die bei Raumtemperatur flüssig sind. Besonders bevorzugt handelt es sich bei den Polyisocyanaten um Polyisocyanate oder Polyisocyanatgemische mit ausschließlich aliphatisch und/oder cycloaliphatisch gebundenen Isocyanatgruppen einer zwischen 1,8 und 5,0 liegenden (mittleren) NCO-Funktionalität.

Falls erforderlich, können die Polyisocyanate in Abmischung mit geringen Mengen an inerten Lösungsmitteln zum Einsatz gelangen, um die Viskosität zu senken.

Geeignet sind beispielsweise "Lackpolyisocyanate" auf Basis von Hexamethylendiisocyanat oder von 1-Isocyanato-3,3,5-trimethyl-5-isocyanatomethyl-cyclohexan (IPDI) und/oder Bis-(isocyanatocyclohexyl)-methan, insbesondere solche, welche ausschließlich auf Hexamethylendiisocyanat basieren. Unter "Lackpolyisocyanaten" auf Basis dieser Diisocyanate sind die an sich bekannten Biuret-, Urethan-, Uretdionund/oder Isocyanatgruppen aufweisenden Derivate dieser Diisocyanate zu verstehen.

Bei den erfindungsgemäß ebenfalls geeigneten, jedoch weniger bevorzugten aromatischen Polyisocyanaten handelt es sich insbesondere um "Lackpolyisocyanate" auf Basis von 2,4-Diisocyanatotoluol oder dessen technischen Gemischen mit 2,6-Diisocyanatotoluol oder auf Basis von 4,4-Diisocyanatodiphenylmethan bzw. dessen Gemischen mit seinen Isomeren und/oder höheren Homologen. Derartige aromatische Lackpolyisocyanate sind beispielsweise die Urethangruppen aufweisenden Isocyanate wie sie durch Umsetzung von überschüssigen Mengen an 2,4-Diisocyanatotoluol mit mehrwertigen Alkoholen wie Trimethylolpropan erhalten werden. Weitere aromatische Lackpolyisocyanate sind beispielsweise die Trimerisate der beispielhaft genannten monomeren Diisocyanate, d.h. die entsprechenden Isocyanatoisocyanurate.

Grundsätzlich möglich ist selbstverständlich auch die Verwendung von unmodifizierten Polyisocyanaten der beispielhaft genannten Art.

Die Polyisocyanatkomponente kann im übrigen aus beliebigen Gemischen der beispielhaft genannten Polyisocyanate bestehen.

Sehr gut geeignet sind auch hydrophilierte Polyisocyanate der o.g. Basisprodukte, die sich leicht in Wasser emulgieren lassen.

Die Überzugsmittelemulsionen werden erhalten, indem man zur Emulsion aus Cellulose-Substanz, OH-gruppenhaltigem Lackharz, Weichmachern und gegebenenfalls eines oder mehrerer Lösemittel das Polyisocyanat unter Rühren hinzugibt. Eine bessere Emulgierung des Polyisocyanates erreicht man, wenn das Polyisocyanat in einem geeigneten Lösemittel, wie z.B. Methoxypropylacetat, auflöst bzw. verdünnt und dann der Lackemulsion zusetzt.

Ein weiterer Gegenstand der Erfindung ist die Verwendung der erfindungsgemäßen Überzugsmittelemulsionen in Lacken für die Oberflächenbehandlung von Holz, Metall, Papier, Leder, glas oder Kunststoffen.

Je nach Anwendungsgebiet (z.B. Holz-, Metall-, Kunststoff-, Leder-, Glas- und Folienlackierungen) können noch weitere bekannte organische Lösungsmittel der Emulsion zugesetzt werden, wobei eine Lösungsmittelkonzentration von 25 %, bezogen auf die Endlackformulierung, nicht überschritten werden sollte.

Die Viskosität kann entweder mit Wasser oder durch Zusatz wasserlöslicher Verdicker auf Basis z.B. von Polyurethanen, Cellulose, Guar, Stärke u.ä. für die gewünschte Applikation eingestellt werden.

Ferner können der Emulsion, vorzugsweise der wäßrigen Phase, auch solche Stoffe zugesetzt werden, die die Verarbeitung oder anwendungstechnischen Eigenschaften verbessern, wie z.B. Gleitmittel, Glanzverbesserungsmittel, Antischaummittel, Schleifbarkeits-Verbesserungsmittel, Verlaufsmittel, Stabilisatoren, Lichtschutzmittel und Farbstoffe, Pigmente, Füllstoffe und/oder lackübliche Additive.

Die gemäß der Erfindung hergestellten wäßrigen Überzugsmittelemulsionen weisen einen sehr guten Verlauf, hohen Glanz und lange Topfzeit auf. Entsprechend der Anwendung formulierten Lackzusammensetzung können z.B. ausgezeichnete Alkohol- und Wasserbeständigkeiten erreicht werden.

### Beispiele

Es wurden gemäß EP-PS 0 076 443 wäßrige NC-Alkydharz-Emulsionen hergestellt, deren Aufbau aus folgender Tabelle ersichtlich ist:

| | Nitrocellulose¹⁾ Normtyp E 24 [g] | Alkydharz [g] | Emulgatoren [g] | Dibutylphthalat [g] | MPA* [g] | Wasser [g] | Verhältnis NC:Alkyd | Festkörpergehalt [%] | Auslaufzeit (21°C) DIN-4-Becher [s] |
|---|---|---|---|---|---|---|---|---|---|
| Emulsion 1 | 277,8 | 425,6²⁾ | 63,0 | 42,0 | 57,0 | 623,7 | 1:1,72 | 38 | 17,0 |
| Emulsion 2 | 121,9 | 283,7²⁾ | 28,0 | 18,7 | 25,3 | 359,5 | 1:2,6 | 38 | 16,0 |
| Emulsion 3 | 91,5 | 283,7²⁾ | 21,0 | 14,0 | 19,0 | 331,0 | 1:3,4 | 38 | 14,0 |
| Emulsion 4 | 121,9 | 329,6³⁾ | 28,0 | 18,7 | 15,3 | 329,5 | 1:2,6 | 38 | 20,0 |

| | | | | | | | | | |
|---|---|---|---|---|---|---|---|---|---|
| ¹⁾ Eingesetzt als wasserfeuchte Nitrocellulose: 65 % Nitrocellulose mit 35 % Wasser. N₂-Gehalt: 12,1 Gew.-% | | | | | | | | | |
| ²⁾ Eingesetzt wurde ein hydroxylgruppenhaltiges Alkydharz, hergestellt gemäß Beispiel 1 der NL-Anmeldung 1 008 777 als 70 gew.-%iges Alkydharz, in Butylacetat (OH-Zahl = 145 ng KOH/g). | | | | | | | | | |
| ³⁾ Eingesetzt wurde das hydroxylgruppenhaltige Alkydharz "Halwftal B 32" der Fa. Hüttenes-Alberts Lackrohstoff GmbH als 60 gew.-%iges Alkydharz, gelöst in Butylacetat (OH-Gehalt: 2,4 %). | | | | | | | | | |
| ^{*)} MPA = Methoxypropylacetat. | | | | | | | | | |

In die wäßrigen NC-Alkydharz-Emulsionen wurden wasseremulgierbare Polyisocyanate in Form einer 70 %igen Polyisocyanatlösung in Methoxypropylacetat eingerührt.

| | Emulsion 1 [g] | Emulsion 2 [g] | Emulsion 3 [g] | Emulsion 4 [g] | Polyisocyanat (70 %ig) [g] | Verhältnis OH(Alkyd):NCO | Topfzeit |
|---|---|---|---|---|---|---|---|
| Beispiel 1 | 200 | - | - | - | 34,9 von 2) | 1:0,77 | 24 h |
| Beispiel 2 - | | 200 | - | - | 60,6 von 1) | 1:1 | 24 h |
| Beispiel 3 | - | - | 200 | - | 62,2 von 1) | 1:1 | >10 Tage |
| Beispiel 4 - | | - | - | 200 | 15,2 von 1) | 1:0,5 | >10 Tage |

| | | | | | | | |
|---|---|---|---|---|---|---|---|
| ¹⁾ Eingesetzt wurde das hydrophile aliphatische Polyisocyanat auf Basis Hexamethylendiisocyanat mit einem NCO-Gehalt von 16,0 % und einer Viskosität bei 23°C von 3,700 mPa·s (Handelsprodukt Bayhydur 3100 der Bayer® AG). | | | | | | | |
| ²) Eingesetzt wurde das Handelsprodukt Basonat P LR 8878 der BASF AG. NCO-Gehalt: 17,2 %; Viskosität bei 23°C = 4.473 mPa·s. | | | | | | | |

Zu 100 g der Emulsionen wurden vor der Isocyanat-Zugabe zugesetzt:

| | |
|---|---|
| Vergleichsbeispiel 1 (Emulsion 1 ohne spätere Isocyanatzugabe) | 6,0 g Butylglykolacetat |
| Beispiel 1 | 6,0 g Butylglykolacetat |
| Beispiel 2 | 4,0 g Butylglykolacetat |
| Beispiel 3 | 12,0 g Butylglykolacetat |
| Beispiel 4 | 8,0 g Butylglykolacetat |

Die Emulsionen wurden mit einem 120-µm-Rakel als Grund- und Decklack auf Holz aufgetragen.

Die Grundierung wurde bei 50°C getrocknet, geschliffen und decklackiert. Gemäß DIN 68 861, Teil 1, 1 B, wurde 7 Tage bei 50°C getrocknet, anschließend 24 h bei Raumtemperatur gelagert und dann die Wasser-, Ethanol- und Acetonbeständigkeiten ermittelt.

Zum Vergleich wurde die Emulsion 1 (ohne Isocyanat-Vernetzung) entsprechend geprüft. Die Ergebnisse sind in folgender Tabelle zusammengestellt.

| | **Wasser** | **Ethanol** | **Aceton** |
|---|---|---|---|
| Vergleichsbeispiel 1 | 2 | 4 | 5 |
| Beispiel 1 | 0 | 0 | 0 |
| Beispiel 2 | 0 | 0 | 0 |
| Beispiel 3 | 0 | 0 | 0 |
| Beispiel 4 | 0 | 0 | 0 |

## Patentansprüche

1. Wässrige Cellulose-Substanz-enthaltende Überzugsmittelemulsion vom Öl-in-Wasser-Typ, erhältlich aus
a) 5,0 - 50 Gew.-% Cellulose-Substanz
b) 5,0 - 50 Gew.-% einen oder mehrerer Hydroxylgruppen-enthaltende Lackharze
c) 2,0 - 25 Gew.-% einen oder mehrerer Polyisocyanate mit mehr als einer freien Isocyanatgruppe
d) 10,0 - 65 Gew.-% Wasser
e) 0,5 - 30 Gew.-% Weichmacher
f) 0,0 - 20 Gew.-% Emulgatoren
g) 0,0 - 45 Gew.-% wenigstens eines organischen Lösemittels,
wobei die Summe a) - g) immer 100 Gew.-% ist, **dadurch gekennzeichnet, daß** das Gewichtsverhältnis OH-Gruppen (aus dem Lackharz) : NCO-Gruppen 1 : 0,05 bis 1 : 5 beträgt und wobei die Polyisocyanatkomponente c) unter Rühren der wässrigen Lackemulsion aus den übrigen Komponenten zugesetzt wurde.

2. Überzugsmittelemulsion nach Anspruch 1, **dadurch gekennzeichnet, daß** das Gewichtsverhältnis von Cellulose-Substanz zu hydroxylgruppenhaltigem Lackharz 1 : 5 bis 5 : 1 beträgt.

3. Überzugsmittelemulsion nach Anspruch 1 oder 2, **dadurch gekennzeichnet, daß** die Cellulosesubstanz Nitrocellulose ist.

4. Verwendung einer Überzugsmittelemulsion gemäß einem der Ansprüche 1 bis 3 in Lackharzemulsionen für die Oberflächenbehandlung von Holz, Metall, Papier, Kunststoff, Leder oder Glas.

## Claims

1. An aqueous oil-in-water-type coating agent emulsion containing cellulose substance, obtainable from
a) 5.0 to 50 wt. % of cellulose substance;
b) 5.0 to 50 wt. % of one or more hydroxyl group-containing film-forming resins;
c) 2.0 to 25 wt. % of one or more polyisocyanates having more than one free isocyanate group;
d) 10.0 to 65 wt. % of water;
e) 0.5 to 30 wt. % of plasticiser;
f) 0.0 to 20 wt. % of emulsifiers; and
g) 0.0 to 45 wt. % of at least one organic solvent,
the sum of a) to g) always being 100 wt. %, wherein the weight ratio of OH groups (from the film-forming resin) : NCO groups is 1 : 0.05 to 1 : 5, and the polyisocyanate component c) having been added with stirring to the aqueous varnish emulsion of the remaining components.

2. The coating agent emulsion of claim 1 wherein the ratio by weight of cellulose substance to hydroxyl group-containing film-forming resin is 1 : 5 to 5 : 1.

3. The coating agent emulsion of claim 1 or 2 wherein the cellulose substance is nitrocellulose.

4. The use of a coating agent emulsion as claimed in one of claims 1 to 3 in film-forming resin emulsions for the surface treatment of wood, metal, paper, plastics, leather or glass.

## Revendications

1. Émulsion aqueuse de revêtement du type huile dans l'eau contenant un matériau cellulosique, pouvant être obtenue à partir de
a) 5,0 à 50 % en poids de matériau cellulosique
b) 5,0 à 50 % en poids d'une ou de plusieurs résines pour peinture comportant des groupes hydroxyle
c) 2,0 à 25 % en poids d'un ou de plusieurs polyisocyanates comportant plus d'un groupe isocyanate libre
d) 10,0 à 65 % en poids d'eau
e) 0,5 à 30 % en poids de plastifiant
f) 0,0 à 20 % en poids d'émulsifiants
g) 0,0 à 45 % en poids d'au moins un solvant
la somme a) - g) étant toujours égale à 100 % en poids, **caractérisée en ce que** le rapport pondéral entre les groupes OH (de la résine pour peinture) et les groupes NCO est compris entre 1:0,05 et 1:5, le composant polyisocyanate c) ayant été ajouté sous agitation à l'émulsion aqueuse de peinture constituée des autres composants.

2. Revêtement selon la revendication 1, **caractérisé en ce que** le rapport pondéral entre le matériau cellulosique et la résine pour peinture comportant des groupes hydroxyle est compris entre 1:5 et 5:1.

3. Revêtement selon la revendication 1 ou 2, **caractérisé en ce que** le matériau cellulosique est de la nitrocellulose.

4. Utilisation d'une émulsion de revêtement selon une des revendications 1 à 3 dans des émulsions de résine pour peinture, pour le traitement en surface du bois, du métal, du papier, des matières plastiques, du cuir ou du verre.
